# EUROPÄISCHE PATENTSCHRIFT

(11) **EP 4 406 804 B1**
(45) Veröffentlichungstag und Bekanntmachung des Hinweises auf die Patenterteilung: **17.09.2025**
(21) Anmeldenummer: 24152490.9
(22) Anmeldetag: 17.01.2024
(51) Int. Cl.: B60W 50/16

(54) **VERFAHREN ZUR STEUERUNG EINES FAHRASSISTENZSYSTEMS UND FAHRASSISTENZSYSTEM ZUR DURCHFÜHRUNG DES VERFAHRENS**
METHOD FOR CONTROLLING A DRIVER ASSISTANCE SYSTEM AND DRIVER ASSISTANCE SYSTEM FOR CARRYING OUT THE METHOD
PROCÉDÉ DE COMMANDE D'UN SYSTÈME D'ASSISTANCE À LA CONDUITE ET SYSTÈME D'ASSISTANCE À LA CONDUITE POUR LA MISE EN OEUVRE DU PROCÉDÉ

(30) Priorität: 25.01.2023 DE 102023200589
(43) Veröffentlichungstag der Anmeldung: 31.07.2024
(73) Patentinhaber: VOLKSWAGEN AKTIENGESELLSCHAFT, 38440 Wolfsburg (DE)
(72) Erfinder: Stahl, Felix, 38106 Braunschweig (DE); Kaste, Jonas, 31061 Alfeld (Leine) (DE); Kallmeyer, Felix, 38448 Wolfsburg (DE)

(56) Entgegenhaltungen:
- EP-A1- 3 378 706
- CN-A- 114 394 108
- DE-A1- 102005 048 542
- US-A1- 2013 317 699
- US-A1- 2018 065 553

## Beschreibung

Die vorliegende Erfindung betrifft ein Verfahren zur Steuerung eines Fahrassistenzsystems eines Kraftfahrzeugs, wobei das Fahrassistenzsystem eine Erfassungseinheit zur Erfassung der Verkehrssituation, eine Klassifizierungseinheit zur Bestimmung der verkehrssituationsabhängig erforderlichen Fahreraufmerksamkeit und mindestens einen Aktuator zur Erzeugung von Lenkmomenten an einem Lenkrad aufweist.

Ferner betrifft die Erfindung ein Fahrassistenzsystem zur Durchführung des Verfahrens.

In herkömmlichen Serienfahrzeugen werden zur Überwachung der Fahreraktivität kapazitive Lenkräder eingesetzt, die eine Berührung des Lenkrads durch den Fahrer mit zwei, drei oder mehr Fingern erkennen. Der Status der Auswertung wird beispielsweise in unterschiedliche Stufen (keine Berührung der Lenkung; nur die linke Hand umgreift das Lenkrad leicht; nur die rechte Hand umgreift das Lenkrad leicht; beidseitig ist das Lenkrad leicht umgriffen; etc.) eingeteilt und an nutzende Funktionen, wie beispielsweise einem Längs- oder Querführungsassistenzsystem übermittelt. Erhält beispielsweise die automatische Distanzregelung (ACC) ein Signal, dass die Hände am Lenkrad sind und es hinreichend fest umgreifen, wird nach Erfüllung weiterer Bedingungen ein Anfahrvorgang zum automatischen Folgen des Vorderobjektes freigeschaltet. Die gegebene oder blockierte Anfahrbereitschaft wird dem Fahrer in geeigneter Weise, beispielsweise an einer Kombinationsanzeige angezeigt.

Beim sog. Travel-Assist (Level 2 FAS System) wird mittels des kapazitiven Lenkrads und/oder der Messung von Fahrerlenkmomenten die Fahreraktivität überwacht. Ein reines Beobachten des Lenkmomentes reicht bisher nicht aus, weil der Fahrer beispielsweise bei Autobahnfahrten nicht dauerhaft ein ausreichendes Moment von beispielsweise ≥ 0,7 Nm aufbringt. Aus diesem Grund wird bei den meisten Fahrzeugherstellern ein Fahrassistenzsystem Level 2 nur mit einem kapazitiven Lenkrad verbaut.

Unabhängig hiervon sind aus unterschiedlichen Druckschriften zum Stand der Technik Verfahren zur Aufprägung und Auswertung von Lenkmomenten bekannt.

Aus DE 10 2008 033 722 A1 ist eine Fahreranwesenheitserkennung in einem Kraftfahrzeug mit mindestens einem Fahrzeugsystem bekannt, das beim stehenden Fahrzeug aktiv sein kann. Es wird vorgeschlagen, mittels mindestens eines Aktors Prüf-Lenkmomente auf eine Lenkung aufzuprägen und mittels mindestens eines Lenkwinkelsensors ein Handlenkmoment des Fahrers zu erfassen. Dabei werden folgende Schritte durchgeführt:
a) Erfassen eines Fahrzeugstillstands im Verkehr,
b) Erfassen von Fahrzeugsystemen, die beim Stillstand aktiv sind und eine Anwesenheit des Fahrers erfordern,
c) Aufprägen eines Prüf-Lenkmomentes durch den mindestens einen Aktor,
d) Erfassen eines gegensteuernden Handlenkmomentes des Fahrers durch den mindestens einen Lenkwinkelsensor und
e) Deaktivieren des aktiven Fahrzeugsystems, wenn kein Handlenkmoment erfasst wird.

Hierdurch lässt sich eine sog. Hands-on-Detection verwirklichen, um die Fahrbereitschaft des Fahrers abschätzen zu können.

Ferner ist aus DE 10 2007 029 482 B4 ein Fahrassistenzsystem für Kraftfahrzeuge bekannt. Das Fahrassistenzsystem weist eine Sensoreinrichtung zur Erkennung einer Situation auf, in der ein Anfahren des Fahrzeugs möglich ist. Ferner ist eine Steuereinrichtung zur Ausgabe eines Anfahrhinweises an den Fahrer vorgesehen. Es wird vorgeschlagen, dass die Steuereinrichtung dazu ausgebildet ist, bei Erkennung einer Anfahrsituation zunächst einen optischen Anfahrhinweis und dann mit zeitlicher Verzögerung einen akustischen und/oder haptischen Anfahrhinweis auszugeben.

Schließlich beschreibt DE 10 2011 121 442 A1 ein Verfahren zum autonomen Anfahren eines Kraftfahrzeugs aus dem Stand. Insbesondere wird vorgeschlagen, dass mittels eines Fahreraufmerksamkeitserkennungssystems Informationen über die Aufmerksamkeit des Fahrers erfasst werden und ein gestarteter Anfahrvorgang abgebrochen wird, wenn nach einer gewissen Zeit oder zurückgelegten Fahrstrecke keine Aufmerksamkeit festgestellt wird, wobei ggf. der bevorstehende Abbruch den Fahrer durch eine akustische, optische und/oder haptische Warnung angezeigt wird mit der Möglichkeit, dies durch einen Fahrerbedienfehler zu vermeiden.

Aus der DE 10 2005 048 542 A1 ist ein Fahrassistenzsystem mit einer Warneinrichtung für die Erzeugung und Abgabe eines Warnsignals bekannt, wobei die Intensität des Warensignals risikoabhängig festgelegt ist.

In der CN 1 14 394 108 A wird ein Verfahren offenbart, wonach der Fahrer eines Fahrzeugs im Fahrzeugstillstand auf das Losfahren aufmerksam gemacht wird, indem eine Vibration auf das Lenkrad aufgeprägt wird. Ein vergleichbaren Verfahren geht aus der US 2018/0065553 A1 hervor.

Weitere Fahrassistenzsysteme sind in der US 2013/0317699 A1 und der EP 3 378 706 A1 beschrieben.

Die nach dem Stand der Technik bekannten Fahreranwesenheitserkennungen haben sich als wenig optimal erwiesen, zumal der Fahrer - wenn überhaupt - nur rudimentär über eine Änderung des vorausliegenden Verkehrs informiert wird.

Es ist daher die Aufgabe der Erfindung, ein Verfahren zur Steuerung eines Fahrassistenzsystems und ein Fahrassistenzsystem zur Durchführung des Verfahrens vorzuschlagen, das die Informationsdichte für den Fahrer, die Hinweise zur vorausliegenden Verkehrssituation beinhalten, zu erhöhen.

Diese Aufgabe wird durch das Verfahren nach Anspruch 1 und durch das Fahrassistenzsystem nach Anspruch 8 gelöst. Erfindungsgemäß sind folgende Schritte vorgesehen:
a) Erfassen eines Fahrzeugstillstands im Verkehr;
b) Erfassen der Verkehrssituation;
c) Bestimmen der verkehrssituationsabhängig erforderlichen Fahreraufmerksamkeit;
d) Aufprägen von Lenkmomenten auf das Lenkrad des Kraftfahrzeugs, wobei die momentane Frequenz und/oder Amplitude der Lenkmomente in Abhängigkeit der erfassten Verkehrssituation eingestellt wird;
e) Variieren der Frequenz und/oder der Amplitude der Lenkmomente nach dem Erfassen einer geänderten Verkehrssituation, die eine geänderte Fahreraufmerksamkeit erfordert, wobei die Frequenz und/oder die Amplitude der Lenkmomente mit der geforderten Fahreraufmerksamkeit in der Weise korreliert, dass eine höhere geforderte Fahreraufmerksamkeit mit einer höheren Frequenz und/oder Amplitude verknüpft ist und umgekehrt.

Durch die Korrelation zwischen der Frequenz und/oder der Amplitude der Lenkmomente und der verkehrssituationsabhängig erforderlichen Fahreraufmerksamkeit wird das aufgeprägte Signal verkehrssituativ angepasst, so dass der Fahrer unmittelbar eine Information darüber erhält, welcher Aufmerksamkeitsgrad zur Fahrzeugführung momentan erforderlich ist. Der Fahrer kann sich hieran schnell und ohne Zeitverzögerung orientieren, so dass insbesondere Abbrüche eines automatischen Fahrzeugstarts aufgrund mangelnder/fehlender Aufmerksamkeit reduziert werden. Hierdurch wird auch der Verkehrsfluss verbessert.

Die erfasste Verkehrssituation kann über eine C2C- oder C2X-Kommunikation auch Informationen enthalten, die der Fahrer selbst bei hoher Aufmerksamkeit nicht erkennen kann, wie beispielsweise eine sich zeitnah ändernde Ampelphase. Insofern erlauben das erfindungsgemäße Verfahren und das erfindungsgemäße Fahrassistenzsystem auch eine Vorbereitung auf eine bevorstehende Änderung der Verkehrssituation.

Beispielsweise wird eine Klassifizierung der folgenden Weise berücksichtigt:
a) Das Warten im Stillstand ohne Bewegungen des umgebenden Verkehrs ist mit einer niedrigen Fahreraufmerksamkeit verknüpft.
b) Eine Ampel wird zeitnah den Status von Rot auf Grün wechseln oder die Vorderfahrzeuge in weiter Entfernung setzen sich in Bewegung, was mit einer durchschnittlichen Fahreraufmerksamkeit verbunden ist.
c) Eine Ampel ist Grün und das unmittelbare Vorderfahrzeug bewegt sich, was eine hohe Fahreraufmerksamkeit erfordert.

Im Gegensatz zum Stand der Technik, insbesondere Im Gegensatz zu DE 10 2008 033 722 A1, sind die aufgeprägten Lenkmomente spürbar und nicht minimal, um den Fahrer über den Status des Assistenzsystems und die Verkehrssituation bzw. den Grad der notwendigen/erforderlichen Fahreraufmerksamkeit zu informieren.

Bevorzugte Weiterbildungen der vorliegenden Erfindung werden nachfolgend und in den Unteransprüchen angegeben.

Das Aufprägen der Lenkmomente auf das Lenkrad erfolgt vorzugsweise in Form von Wechselimpulsen (bipolaren Impulsen).

Nach einer vorteilhaften Weiterbildung der Erfindung ist vorgesehen, dass die Verkehrssituation mit der vergleichsweise am niedrigsten geforderte Fahreraufmerksamkeit mit einer Frequenz von 60 ± 20 Wechselimpulsen pro Minute verknüpft ist. Eine solche Startfrequenz orientiert sich am durchschnittlichen Ruhepuls eines Menschen, was sich als besonders effektiv als Status Feedback ergeben hat. Hiervon ausgehend erhöht sich die Frequenz der Wechselimpulse, sobald eine Verkehrssituation mit einer vergleichsweise höheren Fahreraufmerksamkeit eintritt und erkannt wird.

Die Startfrequenz, also die Frequenz, die einer Verkehrssituation mit der vergleichsweise am niedrigsten geforderten Fahreraufmerksamkeit zugeordnet ist, und/oder die Amplitude und/oder eine maximale Frequenz der aufgeprägten Lenkmomente bzw. der Wechselimpulse lassen sich vorzugsweise benutzerspezifisch einstellen bzw. vorgeben.

Vorzugsweise ist vorgesehen, dass das Aufprägen von Lenkmomenten auf das Lenkrad unterbrochen wird, wenn eine Mindestgeschwindigkeit, insbesondere eine Mindestgeschwindigkeit von 4 km/h und/oder eine Mindeststrecke, insbesondere eine Mindeststrecke von 5 m, überschritten wird. Hierdurch wird verhindert, dass Lenkmomente während der Fahrt im fließenden Verkehr aufgeprägt werden.

Nach einer weiteren vorteilhaften Ausgestaltung der Erfindung ist vorgesehen, dass das Fahrassistenzsystem einen Lenkwinkelsensor aufweist und eine Hands-on-Detection durchgeführt wird, indem eine Differenz zwischen dem erwarteten Lenkmoment und dem mittels des Lenkwinkelsensors gemessenen Lenkmoment registriert wird.

Vorzugsweise erfolgt eine akustisch wahrnehmbare Warnung, wenn eine Verkehrssituation mit einer erhöhten Fahreraufmerksamkeit registriert wird, während die Hände des Fahrers das Lenkrad nicht abfahrbereit umgreifen. Dabei kann die akustisch wahrnehmbare Warnung durch eine Vibration des Lenkrads erfolgen, die eine hohe Frequenz, insbesondere eine Frequenz von 200 ± 20 Wechselimpulsen pro Minute, aufweist.

Nach einer weiteren vorteilhaften Ausgestaltung der Erfindung ist vorgesehen, dass das Aufprägen von Lenkmomenten auf das Lenkrad in Abhängigkeit einer Fahreraufmerksamkeit eingestellt wird, wobei sich die momentane Fahreraufmerksamkeit durch die Auswertung von Aufnahmen einer Fahrerbeobachtungskamera ergibt. Insofern lässt sich das haptische Feedback reduzieren oder vollständig unterbrechen, sofern der Fahrer hinreichend aufmerksam ist, um die bevorstehende Verkehrssituation zu lösen.

Konkrete Ausführungsbeispiele der Erfindung und konkrete Anwendungsbeispiele werden nachfolgend mit Bezug auf die Figuren beschrieben. Es zeigen:
- Fig. 1: ein Fahrzeug mit einem Fahrassistenzsystem,
- Fig. 2: ein Flussdiagramm des Verfahrens und
- Fig. 3: eine schematische Darstellung eines Anwendungsbeispiels.

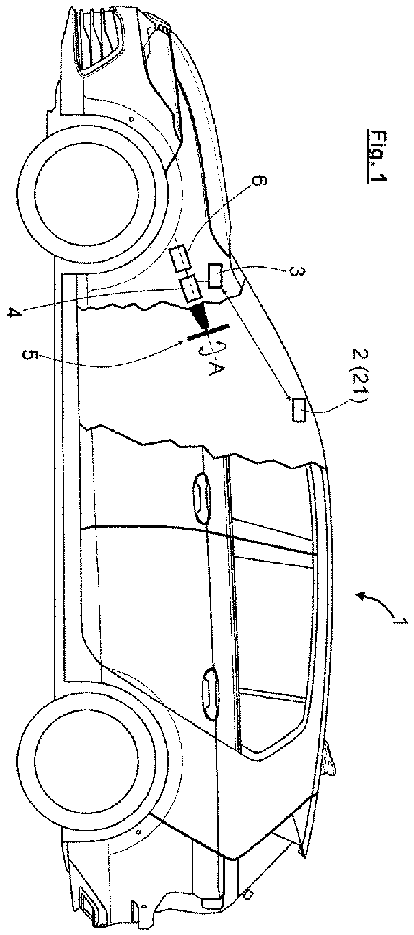

Fig. 1 zeigt in einer teilgeschnittenen Seitenansicht ein Kraftfahrzeug 1, das ein Fahrassistenzsystem aufweist. Das Fahrassistenzsystem umfasst zunächst eine Erfassungseinheit 2 zur Erfassung der Verkehrssituation, wobei die Erfassungseinheit 2 im dargestellten Ausführungsbeispiel als Kamera 21 ausgebildet ist. Ferner ist eine Klassifizierungseinheit 3 angeordnet, die in Abhängigkeit der erfassten Verkehrssituation eingerichtet ist, um die verkehrssituationsabhängige Fahreraufmerksamkeit zu bestimmen. Ergänzend besitzt das Fahrassistenzsystem einen Aktuator 4, der mit der Klassifizierungseinheit 3 zum Datenaustausch verbunden ist und eingerichtet ist, um auf ein Lenkrad 5 Lenkmomente aufzuprägen, so dass das Lenkrad 5 um die Achse A rotiert. Schließlich ist ein Lenkwinkelsensor 6 vorgesehen, mit dem das momentane Lenkmoment des Lenkrads 5 registrierbar ist.

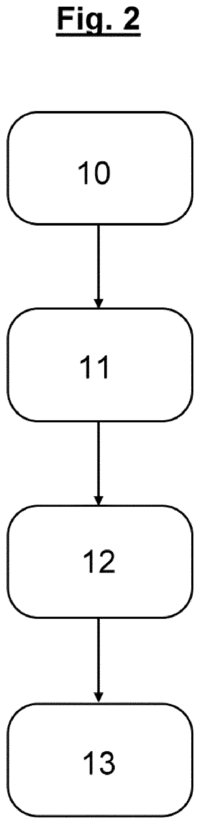

Fig. 2 zeigt ein Ablaufdiagramm des Verfahrens. Zunächst erfolgt das Erfassen 10 eines Fahrzeugstillstandes im Verkehr. Das kann beispielsweise durch eine rote Ampel oder einen Stau bedingt sein. Sobald ein Fahrzeugstillstand im Verkehr registriert wird, erfolgt das Aufprägen 11 von Lenkmomenten auf das Lenkrad des Kraftfahrzeugs, wobei die momentane Frequenz der Lenkmomente in Abhängigkeit der erfassten Verkehrssituation eingestellt wird. Im gezeigten Ausführungsbeispiel erfolgt das Aufprägen von Lenkmomenten in Form von Wechselimpulsen. Sofern die Klassifizierungseinheit die geringstmögliche notwendige Fahreraufmerksamkeit registriert, beispielsweise vor einer geschlossenen Bahnschranke, beträgt die Frequenz der Wechselimpulse beispielsweise 60 Wechselimpulse pro Minute, was dem menschlichen Ruhepuls nachempfunden ist. Nach dem Erfassen einer geänderten Verkehrssituation, die eine geänderte Fahreraufmerksamkeit erfordert, erfolgt das Variieren 12 der Frequenz der Lenkmomente, wobei die Frequenz der Lenkmomente mit der geforderten Fahreraufmerksamkeit in der Weise korreliert, dass eine höhere geforderte Fahreraufmerksamkeit mit einer höheren Frequenz verknüpft ist und umgekehrt. Eine geänderte Verkehrssituation, die eine geänderte Fahreraufmerksamkeit erfordert, ist beispielsweise
- ein bevorstehendes Öffnen einer geschlossenen Bahnschranke oder
- eine bevorstehende Änderung einer Ampelphase von Rot auf Grün oder
- ein bevorstehendes oder bereits erfolgtes Losfahren des Vorderfahrzeugs.

Bei den zuvor konkret angegebenen Änderungen der Verkehrssituation erfolgt jeweils eine Erhöhung der Frequenz der aufgeprägten Lenkmomente, wodurch dem Fahrer jeweils signalisiert wird, dass eine erhöhte Fahreraufmerksamkeit erforderlich ist.

Sofern eine Mindestgeschwindigkeit von 4 km/h oder eine Mindeststrecke von 5 m überschritten wird, erfolgt nach einer konkreten Ausführungsform der Erfindung die Unterbrechung 13 des Aufprägens von Lenkmomenten auf das Lenkrad.

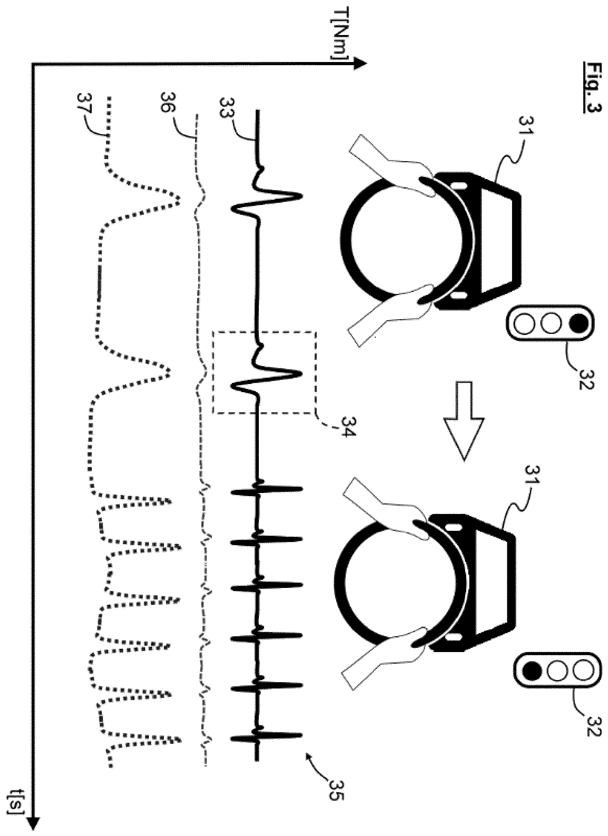

Fig. 3 zeigt in mehreren Piktogrammen eine Verkehrssituation, bei der das Verfahren angewendet wird. Ergänzend zeigt Fig. 3 unterhalb der Piktogramme ein Diagramm mit aufgeprägten, erwarteten und gemessenen Lenkmomenten T in Abhängigkeit der Zeit t.

Auf der linken Seite ist aus der Sicht eines Fahrers eine typische Verkehrssituation gezeigt, bei der das Kraftfahrzeug hinter einem Vorderfahrzeug 31 an einer roten Ampel 32 steht. Insofern registriert die Erfassungseinheit einen Fahrzeugstillstand. In dieser Situation ist die geforderte Fahreraufmerksamkeit gering und auf das Lenkrad 5 werden Lenkmomente 33 in Form von Wechselimpulsen 34 mit einer Frequenz von 60 ± 20 Wechselimpulsen pro Minute aufgeprägt, die einem menschlichen Herzschlag/Puls nachgebildet sind. Sobald die Ampelphase von Rot auf Grün schwenkt, was auf der rechten Seite der Fig. 3 gezeigt ist, wird eine erhöhte erforderliche Fahreraufmerksamkeit erfasst und die Frequenz der aufgeprägten Wechselimpulse 34 wird erhöht (Pfeil 35).

Das Fahrassistenzsystem ist ergänzend ausgebildet, um eine Hand-on-Detection durchzuführen. Hierzu wird eine Differenz zwischen dem erwarteten Lenkmoment 36 und dem mittels des Lenkwinkelsensors gemessenen Lenkmoment 37 registriert. Aus dieser Differenz wird abgeleitet, ob der Fahrer das Lenkrad 5 in abfahrbereiter Weise umgreift. Wird eine Verkehrssituation mit einer erhöhten Fahreraufmerksamkeit registriert, während die Hände des Fahrers das Lenkrad 5 nicht abfahrbereit umgreifen, erfolgt eine akustisch wahrnehmbare Warnung. Eine solche akustisch wahrnehmbare Warnung kann auch durch eine Vibration des Lenkrads 5 erfolgen, wozu das Lenkrad 5 mit Lenkmomenten einer hohen Frequenz beaufschlagt wird.

### Bezugszeichenliste

- 1: Kraftfahrzeug
- 2: Erfassungseinheit
- 21: Kamera
- 3: Klassifizierungseinheit
- 4: Aktuator
- 5: Lenkrad
- 6: Lenkwinkelsensor
- 10: Erfassen eines Fahrzeugstillstandes
- 11: Aufprägen von Lenkmomenten
- 12: Variieren der Frequenz
- 13: Unterbrechen des Aufprägens von Lenkmomenten
- 31: Vorderfahrzeug
- 32: Ampel
- 33: aufgeprägtes Lenkmoment
- 34: Wechselimpuls (bipolarer Impuls)
- 35: Pfeil
- 36: erwartetes Lenkmoment
- 37: gemessenes Lenkmoment
- A: Achse
- T: Lenkmoment

## Patentansprüche

1. Verfahren zur Steuerung eines Fahrassistenzsystems eines Kraftfahrzeugs (1), wobei das Fahrassistenzsystem eine Erfassungseinheit (2) zur Erfassung der Verkehrssituation, eine Klassifizierungseinheit (3) zur Bestimmung der verkehrssituationsabhängig erforderlichen Fahreraufmerksamkeit und mindestens einen Aktuator (4) zur Erzeugung von Lenkmomenten an einem Lenkrad (5) aufweist, mit folgenden Schritten:
a) Erfassen (10) eines Fahrzeugstillstands im Verkehr;
b) Erfassen der Verkehrssituation;
c) Bestimmen der verkehrssituationsabhängig erforderlichen Fahreraufmerksamkeit;
d) Aufprägen (11) von Lenkmomenten auf das Lenkrad (5) des Kraftfahrzeugs (1), wobei die momentane Frequenz und/oder Amplitude der Lenkmomente in Abhängigkeit der erfassten Verkehrssituation eingestellt wird;
e) Variieren (12) der Frequenz und/oder der Amplitude der Lenkmomente nach dem Erfassen einer geänderten Verkehrssituation, die eine geänderte Fahreraufmerksamkeit erfordert, wobei die Frequenz der Lenkmomente mit der geforderten Fahreraufmerksamkeit in der Weise korreliert, dass eine höhere geforderte Fahreraufmerksamkeit mit einer höheren Frequenz und/oder Amplitude verknüpft ist und umgekehrt.

2. Verfahren nach Anspruch 1, **dadurch gekennzeichnet, dass** das Aufprägen der Lenkmomente (33) auf das Lenkrad (5) in Form von Wechselimpulsen (34) erfolgt.

3. Verfahren nach Anspruch 2, **dadurch gekennzeichnet, dass** die Verkehrssituation mit der vergleichsweise am niedrigsten geforderte Fahreraufmerksamkeit mit einer Frequenz von 60 ± 20 Wechselimpulsen pro Minute verknüpft ist.

4. Verfahren nach einem der Ansprüche 1 bis 3, **dadurch gekennzeichnet, dass** die Startfrequenz und/oder die Amplitude und/oder eine maximale Frequenz der aufgeprägten Lenkmomente oder der aufgeprägten Wechselimpulse (34) benutzerspezifisch einstellbar sind.

5. Verfahren nach einem der Ansprüche 1 bis 4, **dadurch gekennzeichnet, dass** das Aufprägen (11) von Lenkmomenten auf das Lenkrad unterbrochen wird, wenn eine Mindestgeschwindigkeit, insbesondere eine Mindestgeschwindigkeit von 4 km/h, und/oder eine Mindeststrecke, insbesondere eine Mindeststrecke von 5 m, überschritten wird.

6. Verfahren nach einem der Ansprüche 1 bis 5, **dadurch gekennzeichnet, dass** das Fahrassistenzsystem einen Lenkwinkelsensor (6) aufweist und eine Hands-on-Detection durchgeführt wird, indem eine Differenz zwischen dem erwarteten Lenkmoment (36) und dem mittels des Lenkwinkelsensors (6) gemessenen Lenkmoment (37) registriert wird.

7. Verfahren nach Anspruch 6, **dadurch gekennzeichnet, dass** eine akustisch wahrnehmbare Warnung erfolgt, wenn eine Verkehrssituation mit einer erhöhten Fahreraufmerksamkeit registriert wird, während die Hände des Fahrers das Lenkrad (5) nicht abfahrbereit umgreifen.

8. Verfahren nach Anspruch 7, **dadurch gekennzeichnet, dass** die akustisch wahrnehmbare Warnung durch eine Vibration des Lenkrads (5) erfolgt, die eine hohe Frequenz, insbesondere eine Frequenz von 200 ± 20 Wechselimpulsen pro Minute, aufweist.

9. Fahrassistenzsystem eines Kraftfahrzeugs (1), wobei das Fahrassistenzsystem eine Erfassungseinheit (2) zur Erfassung der Verkehrssituation, eine Klassifizierungseinheit (3) zur Bestimmung der verkehrssituationsabhängig erforderlichen Fahreraufmerksamkeit und mindestens einen Aktuator (4) zur Erzeugung von Lenkmomenten an einem Lenkrad (5) aufweist, **dadurch gekennzeichnet, dass** das Fahrassistenzsystem zur Durchführung des Verfahrens nach einem der Ansprüche 1 bis 4 ausgebildet ist.

10. Fahrassistenzsystem nach Anspruch 9, **dadurch gekennzeichnet, dass** das Fahrassistenzsystem einen Lenkwinkelsensor (6) aufweist und zur Durchführung des Verfahrens nach einem der Ansprüche 6 bis 8 ausgebildet ist.

## Claims

1. Method for controlling a driver assistance system of a motor vehicle (1), wherein the driver assistance system has a detection unit (2) for detecting the traffic situation, a classification unit (3) for determining the driver attention required depending on the traffic situation, and at least one actuator (4) for generating steering torques on a steering wheel (5), comprising the following steps:
a) detecting (10) a vehicle standstill in traffic;
b) detecting the traffic situation;
c) determining the driver attention required depending on the traffic situation;
d) applying (11) steering torques to the steering wheel (5) of the motor vehicle (1), wherein the instantaneous frequency and/or amplitude of the steering torques is adjusted depending on the detected traffic situation;
e) varying (12) the frequency and/or the amplitude of the steering torques after detecting a changed traffic situation which requires a change in the driver's attention, wherein the frequency of the steering torques correlates with the attention required from the driver in such a way that a greater attention required from the driver is linked to a higher frequency and/or amplitude and vice versa.

2. Method according to claim 1, **characterized in that** the steering torques (33) are applied to the steering wheel (5) in the form of alternating pulses (34).

3. Method according to claim 2, **characterized in that** the traffic situation having the comparatively least driver attention required is linked to a frequency of 60 ± 20 alternating pulses per minute.

4. Method according to any of claims 1 to 3, **characterized in that** the starting frequency and/or the amplitude and/or a maximum frequency of the applied steering torques or the applied alternating pulses (34) can be adjusted in a user-specific manner.

5. Method according to any of claims 1 to 4, **characterized in that** the application (11) of steering torques to the steering wheel is interrupted when a minimum speed, in particular a minimum speed of 4 km/h, and/or a minimum distance, in particular a minimum distance of 5 m, is exceeded.

6. Method according to any of claims 1 to 5, **characterized in that** the driver assistance system comprises a steering-angle sensor (6) and a hands-on detection is carried out by a difference being registered between the expected steering torque (36) and the steering torque (37) measured by means of the steering-angle sensor (6).

7. Method according to claim 6, **characterized in that** an audible warning is given when a traffic situation having increased driver attention is registered while the hands of the driver are not gripping the steering wheel (5) ready to drive off.

8. Method according to claim 7, **characterized in that** the audible warning is given via a vibration of the steering wheel (5), which vibration has a high frequency, in particular a frequency of 200 ± 20 alternating pulses per minute.

9. Driver assistance system of a motor vehicle (1), the driver assistance system having a detection unit (2) for detecting the traffic situation, a classification unit (3) for determining the driver attention required depending on the traffic situation, and at least one actuator (4) for generating steering torques on a steering wheel (5), **characterized in that** the driver assistance system is designed to carry out the method according to any of claims 1 to 4.

10. Driver assistance system according to claim 9, **characterized in that** the driver assistance system comprises a steering-angle sensor (6) and is designed to carry out the method according to any of claims 6 to 8.

## Revendications

1. Procédé de commande d'un système d'aide à la conduite d'un véhicule automobile (1), dans lequel le système d'aide à la conduite présente une unité de détection (2) pour la détection de la situation de circulation, une unité de classification (3) pour la détermination de la vigilance du conducteur nécessaire en fonction de la situation de circulation et au moins un actionneur (4) pour la génération de couples de direction sur un volant de direction (5), comportant les étapes suivantes :
a) détection (10) d'une immobilisation de véhicule dans la circulation ;
b) détection de la situation de circulation ;
c) détermination de la vigilance du conducteur nécessaire en fonction de la situation de circulation ;
d) application (11) de couples de direction sur le volant de direction (5) du véhicule automobile (1), dans lequel la fréquence et/ou l'amplitude momentanées des couples de direction sont réglées en fonction de la situation de circulation détectée ;
e) variation (12) de la fréquence et/ou de l'amplitude des couples de direction après la détection d'une situation de circulation modifiée qui requiert une vigilance du conducteur modifiée, dans lequel la fréquence des couples de direction est corrélée à la vigilance du conducteur requise de telle sorte qu'une vigilance du conducteur requise plus élevée est associée à une fréquence et/ou à une amplitude plus élevées et inversement.

2. Procédé selon la revendication 1, **caractérisé en ce que** l'application des couples de direction (33) sur le volant de direction (5) est effectuée sous forme d'impulsions alternées (34).

3. Procédé selon la revendication 2, **caractérisé en ce que** la situation de circulation avec la vigilance du conducteur comparativement la plus faible requise est associée à une fréquence de 60 ± 20 impulsions alternées par minute.

4. Procédé selon l'une des revendications 1 à 3, **caractérisé en ce que** la fréquence de départ et/ou l'amplitude et/ou une fréquence maximale des couples de direction appliqués ou des impulsions alternées (34) appliquées sont réglables de manière spécifique à l'utilisateur.

5. Procédé selon l'une des revendications 1 à 4, **caractérisé en ce que** l'application (11) de couples de direction sur le volant de direction est interrompue lorsqu'une vitesse minimale, en particulier une vitesse minimale de 4 km/h, et/ou une distance minimale, en particulier une distance minimale de 5 m, sont dépassées.

6. Procédé selon l'une des revendications 1 à 5, **caractérisé en ce que** le système d'aide à la conduite présente un capteur d'angle de direction (6) et une détection de mains sur le volant est mise en œuvre en enregistrant une différence entre le couple de direction attendu (36) et le couple de direction mesuré (37) au moyen du capteur d'angle de direction (6).

7. Procédé selon la revendication 6, **caractérisé en ce qu'**un avertissement acoustique perceptible est effectué lorsqu'une situation de circulation avec une vigilance du conducteur plus élevée est enregistrée alors que les mains du conducteur n'entourent pas le volant de direction (5) d'une manière permettant un départ.

8. Procédé selon la revendication 7, **caractérisé en ce que** l'avertissement acoustique perceptible est effectué par une vibration du volant de direction (5) qui présente une fréquence élevée, en particulier une fréquence de 200 ± 20 impulsions alternées par minute.

9. Système d'assistance à la conduite d'un véhicule automobile (1), dans lequel le système d'assistance à la conduite présente une unité de détection (2) pour la détection de la situation de circulation, une unité de classification (3) pour la détermination de la vigilance du conducteur nécessaire en fonction de la situation de circulation et au moins un actionneur (4) pour la génération de couples de direction sur un volant de direction (5), **caractérisé en ce que** le système d'aide à la conduite est réalisé selon l'une des revendications 1 à 4 pour la mise en œuvre du procédé.

10. Système d'aide à la conduite selon la revendication 9, **caractérisé en ce que** le système d'aide à la conduite présente un capteur d'angle de direction (6) et est réalisé selon l'une des revendications 6 à 8 pour la mise en œuvre du procédé.
